# EUROPÄISCHE PATENTANMELDUNG

(11) **EP 4 556 645 A1**
(43) Veröffentlichungstag der Anmeldung: **21.05.2025**
(21) Anmeldenummer: 24212498.0
(22) Anmeldetag: 12.11.2024
(51) Int. Cl.: E03F 9/00

(54) **FRÄSSYSTEM FÜR KANALSANIERUNG**

(30) Priorität: 16.11.2023 DE 102023131982
(71) Anmelder: iPEK International GmbH, 87477 Sulzberg (DE)
(72) Erfinder: Engler, Christian, 87538 Obermaiselstein (DE); Ostermeier, Markus, 87493 Lauben (DE); Meßmang, Tamara, 87466 Oy-Mittelberg (DE)
(74) Vertreter: 2s-ip Schramm Schneider Bertagnoll Patent- und Rechtsanwälte Part mbB

(57) **Zusammenfassung**

Bereit gestellt wird ein Frässystem (1) für die Sanierung eines Kanals, insbesondere Abwasserkanals, umfassend
- eine Motoreinheit (10) und
- einen Fräskopf (20), an dem ein Fräswerkzeug (21) angeordnet ist,
wobei
der Fräskopf (20) mit der Motoreinheit (10) gekoppelt ist und das Fräswerkzeug (21) entlang zumindest einer Bewegungsachse bewegbar ist, und
die Motoreinheit (10) derart mit dem Fräskopf (20) gekoppelt ist, dass mit ihr ein Bewegen des Fräswerkzeuges (21) entlang der zumindest einen Bewegungsachse bewirkt werden kann.

## Beschreibung

### Gebiet der Erfindung

Die Erfindung betrifft ein Frässystem für die Sanierung bzw. zum Sanieren eines Kanals, insbesondere Abwasserkanals.

### Hintergrund der Erfindung

Es ist bekannt, im Bereich der Kanalsanierung sogenannte Fräsvorrichtungen zu verwenden, um beispielsweise verschlossene Seiteneinläufe zu öffnen oder in den Kanal hineinragende Wurzeln zu entfernen. Derartige Fräsvorrichtungen weisen einen Fahrwagen auf, an dem ein Fräswerkzeug angeordnet ist. Im Fahrwagen sind Antriebsmittel für den Antrieb des Fräswerkzeuges vorgesehen. Das Fräswerkzeug kann entlang einer Bewegungsachse relativ zum Fahrwagen verfahren werden, was allerdings entsprechend angepasste Antriebsmittel erfordert. Ein Bewegen des Fräswerkzeuges in axialer Richtung, d.h. entlang der Kanalachse kann nur durch ein Bewegen des Fahrwagens in diese Richtung bewerkstelligt werden.

Derartige Fräsvorrichtungen werden manuell gesteuert. Die (manuell erzeugten) Steuerbefehle werden über Datenleitungen von einer außerhalb des Kanals angeordneten Steuereinrichtung an die Fräsvorrichtung übertragen.

Ferner sind die Fräswerkzeuge sehr groß dimensioniert, um beispielsweise einen verschlossenen Seiteneinlauf mit einem einzigen Fräsvorgang vollständig öffnen zu können, bei dem das Fräswerkzeug nur entlang der genannten Bewegungsachse bewegt werden muss. Für Seiteneinläufe mit unterschiedlichem Durchmesser werden daher in der Regel auch unterschiedliche Fräswerkzeuge mit einem entsprechenden Durchmesser verwendet. Müssen in einem Kanal unterschiedlich große Seiteneinläufe geöffnet werden, ist es daher erforderlich, für jedem Seiteneinlauf die Fräsvorrichtung aus dem Kanal zu holen und mit dem entsprechenden Fräswerkzeug zu bestücken.

Während eines Fräsvorganges können sehr hohe Rückstellkräfte auf die gesamte Fräsvorrichtung wirken, was entsprechend dimensionierte Fräsvorrichtungen erfordert, etwa große und schwere Fahrwagen.

### Aufgabe der Erfindung

Aufgabe der vorliegenden Erfindung ist es daher, die vorstehend genannten Nachteile zumindest teilweise zu vermeiden und ein Frässystem bereitzustellen, dass einfacher und gleichzeitig sicher handhabbar ist.

### Erfindungsgemäße Lösung

Gelöst wird diese Aufgabe mit einem Frässystem für die Sanierung eines Kanals, insbesondere Abwasserkanals, und einem Kanalinspektionssystem, umfassend einen Fahrwagen und ein erfindungsgemäßes Frässystem, gemäß den unabhängigen Ansprüchen. Vorteilhafte Ausgestaltungen der Erfindung sind in den abhängigen Ansprüchen angegeben.

Bereit gestellt wird demnach ein Frässystem für die Sanierung eines Kanals, insbesondere Abwasserkanals, umfassend
- eine Motoreinheit und
- einen Fräskopf, an dem ein Fräswerkzeug angeordnet ist,
wobei
der Fräskopf mit der Motoreinheit gekoppelt ist und das Fräswerkzeug entlang zumindest einer Bewegungsachse bewegbar ist, und
die Motoreinheit derart mit dem Fräskopf gekoppelt ist, dass mit ihr ein Bewegen des Fräswerkzeuges entlang der zumindest einen Bewegungsachse bewirkt werden kann.

Vorteilhaft ist es, wenn die zumindest eine Bewegungsachse
- eine erste Bewegungsachse,
- eine zweite Bewegungsachse und
- eine dritte Bewegungsachse
umfasst, wobei das Fräswerkzeug entlang der ersten, zweiten und/oder dritten Bewegungsachse bewegbar ist, und wobei die Motoreinheit derart mit dem Fräskopf gekoppelt ist, dass mit ihr ein Bewegen des Fräswerkzeuges entlang der ersten und/oder zweiten und/oder dritten Bewegungsachse bewirkt werden kann.

Das Fräswerkzeug dadurch beliebig im Raum positioniert werden.

Diese drei Bewegungsachsen können in einer Ausgestaltung der Erfindung senkrecht zueinander stehen. Optional können sie auch in jeweils anderen Winkeln zueinander stehen.

Das Fräswerkzeug kann in jede dieser drei Achsen unabhängig von den jeweils anderen zwei Achsen bewegt werden. Ein Vorteil hierin besteht darin, dass ein Fahrwagen, an dem das Frässystem angeordnet sein kann, während eines Fräsvorganges seine Position im Kanal nicht ändern muss. Ferner kann aufgrund der Bewegbarkeit des Fräswerkzeuges entlang dieser drei Bewegungsachse unterschiedlich große Bereich im Kanal bearbeitet werden, ohne hierfür einen Tausch des Fräswerkzeuges vornehmen zu müssen - beispielsweise können mit ein und demselben Fräswerkzeug Seiteneinläufe mit unterschiedlichen Durchmessern geöffnet werden.

Vorteilhaft ist es, wenn die Motoreinheit mittels einer Getriebeeinheit, insbesondere Winkelgetriebeeinheit, mit dem Fräskopf gekoppelt ist, wobei jeder Bewegungsachse ein Getriebe der Getriebeeinheit zugeordnet ist, wobei die Getriebe der Getriebeeinheit unabhängig voneinander betrieben werden können. Der Fräskopf kann so hinsichtlich der Dimensionen besonders kompakt ausgestaltet werden.

In einer Ausgestaltung der Erfindung kann es vorteilhaft sein, wenn die Motoreinheit eine Anzahl von Motoren, insbesondere Elektromotoren, umfasst, wobei jeder Bewegungsachse ein Motor der Anzahl von Motoren zugeordnet ist, und wobei jeder Motor angepasst ist, das Fräswerkzeug entlang der jeweiligen Bewegungsachse zu bewegen. Die Motoren können hierbei im Fräskopf angeordnet sein, vorzugsweise direkt an den jeweiligen Bewegungsachsen.

In einer Ausgestaltung der Erfindung kann es vorteilhaft sein, wenn
- der Fräskopf um eine Drehachse drehbar, und/oder
- das Fräswerkzeug um eine Schwenkachse schwenkbar ist,
wobei der Drehachse und/oder der Schwenkachse jeweils ein Getriebe der Getriebeeinheit oder ein Motor der Anzahl von Motoren zugeordnet ist.

Damit werden bis zu zwei weitere Freiheitsgrade des Fräswerkzeuges möglich, was die Flexibilität hinsichtlich der Einsatzmöglichkeiten deutlich erhöht.

Vorteilhaft ist es, wenn das Frässystem ferner eine Steuervorrichtung umfasst, die mit einem Sensorsystem und der Motoreinheit gekoppelt ist, wobei die Steuervorrichtung angepasst ist, abhängig von den mit dem Sensorsystem detektierten Messwerten die Motoreinheit zu steuern.

Das Sensorsystem kann hierbei
- zumindest einen Kraftsensor zur Detektion zumindest einer auf das Fräswerkzeug wirkenden Kraft, und/oder
- einen Temperatursensor zur Detektion einer Temperatur des Fräswerkzeugs, und/oder
- einen Drehmomentsensor zur Detektion des auf das Fräswerkzeug wirkenden Drehmoments
umfassen, wobei gemäß der Erfindung das Sensorsystem nicht auf diese drei Arten von Sensoren beschränkt ist. Andere Sensoren können zusätzlich vorgesehen sein, wenn sie sich für das Steuern der Motoreinheit mittels der Steuervorrichtung als vorteilhaft erweisen.

Durch das Vorsehen dieser oder gegebenenfalls weiterer Sensoren und die Berücksichtigung der Messwerte durch die Steuervorrichtung kann beispielsweise die Drehzahl des Fräswerkzeuges oder der Vorschub angepasst bzw. gesteuert/geregelt werden. Auf das Fräswerkzeug wirkende Kräfte und damit auf einen Fahrwagen, an dem die Fräsvorrichtung angeordnet ist, wirkende Kräfte können so deutlich reduziert werden, ohne die Effizienz des Fräsvorganges negativ zu beeinflussen. Die mechanische Belastung der Fräsvorrichtung (inklusive des Fräswerkzeuges) und des Fahrzeuges wird dadurch deutlich verringert, was zu einer längeren Lebensdauer des Gesamtsystems bei gleichzeitig geringerem Wartungsaufwand führt.

In einer Ausgestaltung der Erfindung kann die Steuervorrichtung angepasst sein, die Motoreinheit gemäß einem vorbestimmten Programmablauf zu steuern. Ein Fräsvorgang kann so zumindest teilweise automatisiert werden, etwa mittels einer Zyklussteuerung. Beispielsweise kann ein Programm vorgesehen sein, mit dem der Fräskopf in eine vorbestimmte Stellung (etwa hinsichtlich der drei Bewegungsachsen) gebracht wird oder mit dem das Fräswerkzeug entlang eines vorbestimmten Pfades bewegt wird.

In einer Ausgestaltung der Erfindung kann das Frässystem an einem Fahrwagen eines Kanalinspektionssystem anordenbar sein.

In einem weiteren Aspekt der Erfindung wird ein Kanalinspektionssystem bereitgestellt, umfassend einen Fahrwagen und ein erfindungsgemäßes Frässystem.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein erfindungsgemäßes Frässystem in einer perspektivischen Ansicht mit einem nach oben geschwenkten Fräswerkzeug (Abbildung a) und mit einem nach unten geschwenkten Fräswerkzeug (Abbildung b);
- Fig. 2: ein erfindungsgemäßes Frässystem in einer Seitenansicht mit einem nach oben geschwenkten Fräswerkzeug (Abbildung a) und mit einem nach unten geschwenkten Fräswerkzeug (Abbildung b);
- Fig. 3: ein erfindungsgemäßes Frässystem in einer Ansicht von vorne mit einem nach oben geschwenkten Fräswerkzeug (Abbildung a) und mit einem nach unten geschwenkten Fräswerkzeug (Abbildung b);
- Fig. 4: ein erfindungsgemäßes Frässystem in einer Ansicht von oben mit einem nach oben geschwenkten Fräswerkzeug (Abbildung a) und mit einem nach unten geschwenkten Fräswerkzeug (Abbildung b);
- Fig. 5: ein erfindungsgemäßes Frässystem in einer perspektivischen Ansicht, das an einem Hebesystem eines Fahrwagens angeordnet ist, in verschiedenen Stellungen des Hebesystems und verschiedenen Schwenkpositionen des Fräswerkzeuges; und
- Fig. 6: ein Blockschaltbild eines erfindungsgemäßen Frässystems.

### Detaillierte Beschreibung der Erfindung

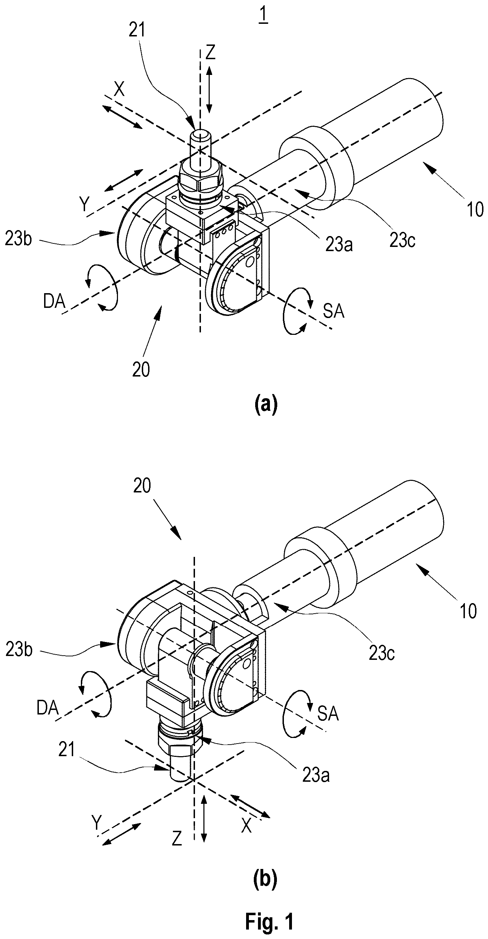

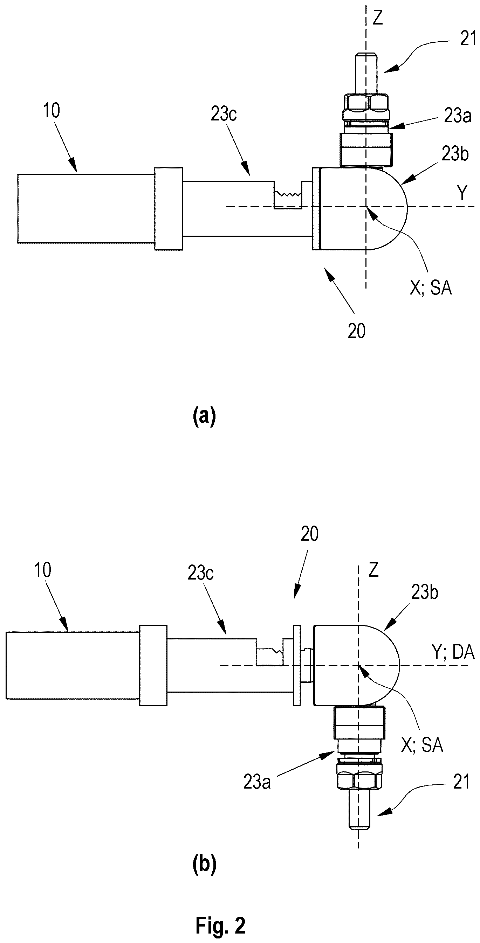

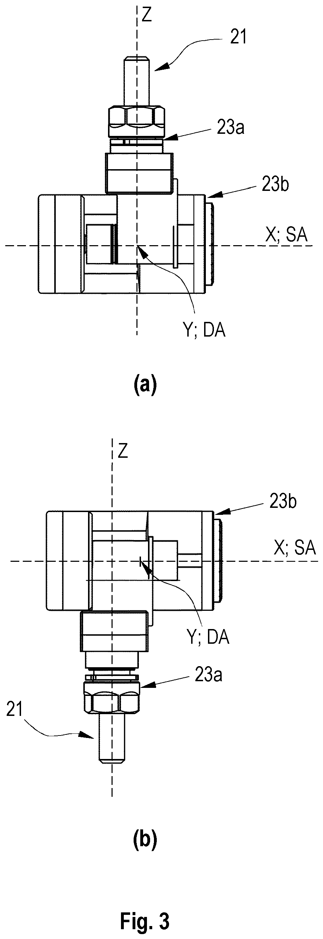

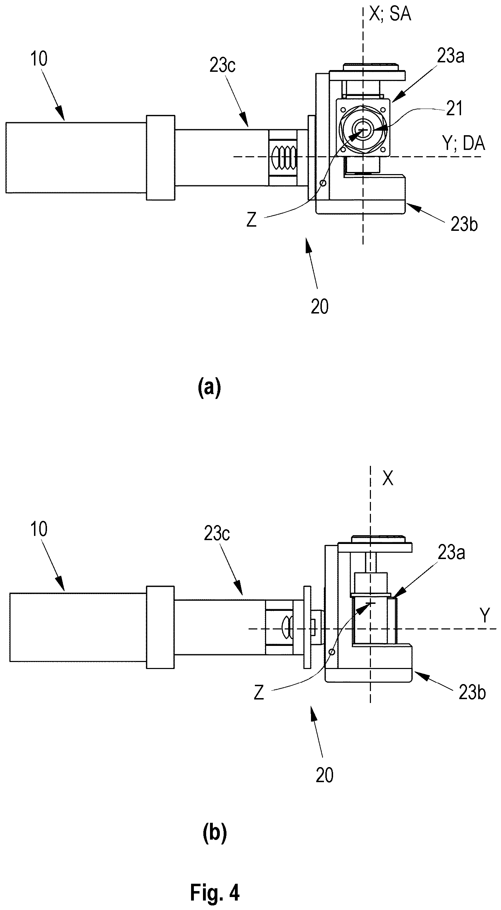

Fig. 1 bis Fig. 4 zeigen ein erfindungsgemäßes Frässystem, wobei in **Fig. 1** eine perspektivische Ansicht, in **Fig. 2** eine Seitenansicht, in **Fig. 3** eine Ansicht von vorne und in **Fig. 4** eine Ansicht von oben des Frässystems gezeigt ist. Das in den Fig. 1 bis Fig. 4 gezeigte Frässystem ist jeweils mit einem nach oben geschwenkten Fräswerkzeug (Abbildungen (a)) und einem nach unten geschwenkten Fräswerkzeug (Abbildungen (b)) gezeigt. Die Fig. 1 bis Fig. 4 werden nachfolgend zusammen beschrieben.

Das erfindungsgemäßes Frässystem 1 umfasst im Wesentlichen eine Motoreinheit 10 und einen Fräskopf 20. Die Motoreinheit 10 ist mit dem Fräskopf 20 gekoppelt. Der Fräskopf 20 wiederum weist ein Fräswerkzeug 21 auf, das entlang dreier Bewegungsachsen X, Y und Z bewegbar ist, wobei die Bewegungsachsen X, Y und Z vorzugsweise senkrecht zueinander stehen. Optional sind andere Winkel der Bewegungsachsen X, Y und Z zueinander aber auch möglich, insbesondere wenn die weiter unten genannten Drehachse DA und/oder Schwenkachse SA vorgesehen sind.

Die Bewegung des Fräswerkzeuges 21 entlang der Bewegungsachse Y kann mit einem Linearantrieb 22 realisiert werden, etwa eine Zahnstange mit einem dieser zugeordneten Ritzel. Das Ritzel kann hierbei von der Motoreinheit 10 angetrieben werden. Alternativ kann anstelle einer Zahnstange mit Ritzel auch eine Gewindespindel vorgesehen sein. Für die Erfindung wesentlich ist, dass das Fräswerkzeug 21 entlang der Bewegungsachse Y bewegbar ist, wobei hierbei Antriebsmittel verwendet werden können, die geeignet sind, eine translatorische Bewegung des Fräswerkzeuges 21 entlang der Bewegungsachse Y zu bewirken.

Für das Bewegen des Fräswerkzeuges 21 entlang der Bewegungsachsen X und Z können ebenfalls Linearantriebe vorgesehen sein, die über beispielsweise über Winkelgetriebe mit der Motoreinheit 10 gekoppelt sind. Je nach Anordnung der Motoreinheit 10 relativ zum Linearantrieb 22 für die Bewegungsachse Y kann auch dieser Linearantrieb über ein Winkelgetriebe mit der Motoreinheit 10 gekoppelt sein.

Der Fräskopf besteht im Wesentlichen aus drei Einheiten, nämlich aus:
- einer Fräswerkzeugeinheit 23a, an dem das Fräswerkzeug 21 angeordnet ist,
- einer Schwenkgabel 23b, an dem die Fräswerkzeugeinheit 23a angeordnet ist, und
- einer Fräskopfführung 23c, an dem Schwenkgabel 23b angeordnet ist.

In der Fräskopfführung 23c kann der der Linearantrieb 22 angeordnet sein. Alternativ kann die Fräskopfführung 23c auch durch den Linearantrieb 22 selbst gebildet werden. Mit Hilfe der Fräskopfführung 23c wird die Schwenkgabel 23b entlang der Bewegungsachse Y bewegt, und damit auch das Fräswerkzeug 21.

In der Schwenkgabel 23b, d.h., zwischen den beiden Gabelbeinen der Schwenkgabel 23b ist die Fräswerkzeugeinheit 23a angeordnet und mit einem Linearantrieb gekoppelt, beispielsweis ein Spindelantrieb. Mit Hilfe dieses Linearantriebes kann die Fräswerkzeugeinheit 23a zwischen den beiden Gabelbeinen und relativ zur Schwenkgabel entlang der Bewegungsachse X hin- und herbewegt werden, wodurch auch das Fräswerkzeug 21 entlang der Bewegungsachse X entsprechend hin- und herbewegt wird.

An der Fräswerkzeugeinheit 23 a ist das Fräswerkzeug 21 angeordnet und mit einem Linearantrieb, etwa einem Spindelantrieb gekoppelt. Mittels dieses Linearantriebes kann das Fräswerkzeug 21 entlang der Bewegungsachse Z und relativ zur Fräswerkzeugeinheit vor- und zurückbewegt werden.

Mittels der drei Einheiten 23a, 23b, 23c kann das Fräswerkzeug 21 bezogen auf die drei Bewegungsachsen X, Y, Z beliebig im Raum, d.h. im Kanal, positioniert werden, ohne dass eine Basiseinheit, z.B. ein Fahrwagen, an der das Frässystem angeordnet ist, bewegt werden muss.

In einer Ausgestaltung der Erfindung ist es vorgesehen, den Fräskopf 20 um eine Drehachse DA drehbar auszugestalten. Die Drehachse DA kann hierbei deckungsgleich oder parallel zur Bewegungsachse Y verlaufen. Mittels eines entsprechenden Antriebes kann die Motoreinheit 10 die Fräskopfführung 23c um die Drehachse DA drehen, sodass auch das Fräswerkzeug um diese Drehachse DA gedreht wird. Der Drehwinkel beträgt vorzugsweise bis 180°, ganz besonders bevorzugt bis zu 360°.

Ferner kann es vorgesehen sein, die Fräswerkzeugeinheit 23a um eine Schwenkachse SA relativ zur Schwenkgabel 23b schwenkbar auszugestalten, wodurch das Fräswerkzeug beispielsweise nach vorne oder nach unten geschwenkt werden kann. Die Schwenkachse SA kann hierbei deckungsgleich oder parallel zur Bewegungsachse X verlaufen. Der Schwenkvorgang wird ebenfalls von der Motoreinheit 10 bewerkstelligt, der hierfür über entsprechende Getriebemittel mit der Fräswerkzeugeinheit 23a gekoppelt ist. Der Schwenkwinkel beträgt vorzugsweise 180°, kann aber auch größer als 180° sein.

Mit der Drehachse DA, der Schwenkachse SA und den drei Bewegungsachsen X, Y, Z stehen fünf Freiheitsgrade für die Positionierung und Ausrichtung des Fräswerkzeuges im Kanal zur Verfügung, was die Flexibilität des erfindungsgemäßen Frässystems deutlich erhöht.

In den Abbildungen (a) der Fig. 1 bis Fig. 4 ist die Fräswerkzeugeinheit 23a jeweils nach oben hin ausgerichtet und befindet sich etwa mittig zwischen den Gabelbeinen der Schwenkgabel 23b. Die Fräswerkzeugeinheit 23a befindet sich hier bezogen auf die Bewegungsachse X in einer Neutralstellung.

In den Abbildungen (b) der Fig. 1 bis Fig. 4 hingegen ist die Fräswerkzeugeinheit 23a jeweils nach unten hin ausgerichtet und befindet sich etwa am linken Gabelbein der Schwenkgabel 23b.

Beider hier gezeigten Ausgestaltung des erfindungsgemäß Frässystems 1 ist die Motoreinheit 10 über eine Getriebeeinheit, insbesondere Winkelgetriebeeinheit, mit den drei Einheiten des Fräskopfes gekoppelt, wobei jeder Bewegungsachse X, Y, Z ein Getriebe der Getriebeeinheit zugeordnet ist. Der Schwenkachse SA und der Drehachse DA kann ebenfalls jeweils ein Getriebe der Getriebeeinheit zugeordnet sein.

Die Motoreinheit kann eine Anzahl von Motoren umfassen, wobei jeder Motor mit einem Getriebe der Getriebeeinheit gekoppelt ist.

In einer alternativen, aber dennoch erfindungsgemäßen Ausgestaltung der Erfindung, kann die Motoreinheit kann eine Anzahl von Motoren, insbesondere Elektromotoren, umfassen. Jeder dieser Motoren ist dabei einer Bewegungsachse bzw. der Drehachse und der Schwenkachse zugeordnet. Diese Motoren können direkt an der entsprechende Achse angeordnet sei, wodurch die Getriebe teilweise entfallen oder zumindest stark vereinfacht werden können.

Beispielsweise kann der der Bewegungsachse X zugeordnete Motor in einem Gabelbein der Schwenkgabel 23b angeordnet sein. Der Motor, der der Schwenkachse zugeordnet ist kann dann in dem anderen Gabelbein der Schwenkgabel 23b angeordnet sein. Der der Bewegungsachse Z zugeordnete Motor kann beispielsweise in der Fräswerkzeugeinheit 23a angeordnet sein. Der der Bewegungsachse Y zugeordnete Motor und der der Drehachse DA zugeordnete Motor können beispielsweise in der Fräskopfführung 23c angeordnet sein.

Der Antrieb des Fräswerkzeuges 21 kann in der Fräswerkzeugeinheit 23a angeordnet sein, oder mittels entsprechender Getriebemittel mit einem Motor der Motoreinheit gekoppelt sein.

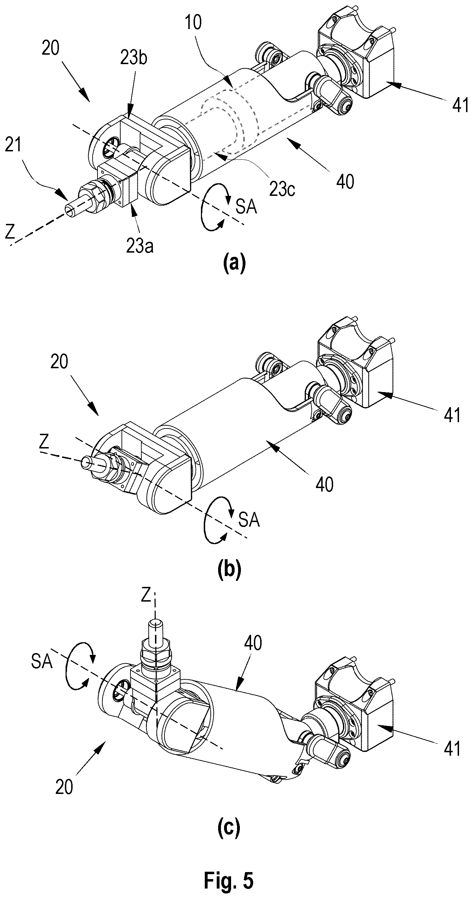

**Fig. 5** zeigt ein erfindungsgemäßes Frässystem 1 in einer perspektivischen Ansicht, das an einem Hebesystem 40 eines Fahrwagens angeordnet ist, in verschiedenen Stellungen des Hebesystems und verschiedenen Positionen des Fräswerkzeuges 21.

Das Hebesystem 40 umfasst hier ein Rohr, das mittels einer Konsole 41 an einem hier nicht gezeigten Fahrwagen befestigt werden kann. Zwischen dem Rohr und der Konsole sind Schwenkmittel angeordnet, mit denen das Rohr relativ zum Fahrwagen nach oben und nach unten geschwenkt werden kann. Optional können diese Schwenkmittel auch ausgestaltet sein, das Rohr zusätzlich nach rechts und nach zu schwenken.

Im vorderen Endabschnitt des Rohres ist das erfindungsgemäße Frässystem 1 angeordnet, wobei sich der Fräskopf 21 außerhalb des Rohres befindet. Die Motoreinheit 10 ist in dem Rohr angeordnet und dort arretiert.

Mit dem Hebesystem 40 kann das gesamte Frässystem 1 relativ zum Fahrwagen angehoben bzw. abgesenkt (bzw. optional zusätzlich zur Seite geschwenkt) werden. Das ist insbesondere dann vorteilhaft, wenn Fräsarbeiten in Kanalrohren mit gro-ßem Durchmesser durchgeführt werden müssen. Das Frässystem 1 kann dann beispielsweise zunächst mit dem Hebesystem angehoben werden und in die Nähe der zu bearbeitenden Stelle gebracht werden. Die Präzisionsausrichtung des Fräswerkzeuges wird dann von bzw. mit dem erfindungsgemäßen Frässystem 1 vorgenommen.

Abbildung (a) der Fig. 5 zeigt ein weitgehend waagerecht ausgerichtetes Hebesystem, wobei die Fräswerkzeugeinheit 23a so um die Schwenkachse SA geschwenkt ist, dass das Fräswerkzeug 21 nach vorne ausgerichtet ist.

In Abbildung (b) der Fig. 5 ist das Hebesystem ebenfalls weitgehend waagerecht ausgerichtet. Die Fräswerkzeugeinheit 23a ist hier so um die Schwenkachse SA geschwenkt ist, dass sie bezogen auf den Fräskopf 1 leicht nach oben hin ausgerichtet ist.

In Abbildung (c) der Fig. 5 ist das Hebesystem um einen bestimmten Winkel nach geschwenkt. Die Fräswerkzeugeinheit 23a ist so um die Schwenkachse SA geschwenkt ist, dass sie bezogen auf den Fräskopf 1 leicht nach oben hin ausgerichtet ist. Aufgrund der Kombination von Schwenkwinkel des Hebesystems und Schwenkwinkel der Fräswerkzeugeinheit 23a ist das Fräswerkzeug 21 nahezu senkrecht ausgerichtet.

In einer alternativen Ausgestaltung der Erfindung kann anstelle eines Rohres ein Hebearm als Hebesystem vorgesehen werden, der an einem Fahrwagen angeordnet werden kann und relativ zum Fahrwagen nach oben geschwenkt werden kann. Das Frässystem 1 kann dann am freien Ende des Hebearms angeordnet werden.

Alternativ kann der Hebearm mindestens zwei Hebearmabschnitte aufweisen, die gelenkig, vorzugsweise über ein Drehgelenk, miteinander gekoppelt sind. Das freie Ende eines der beiden Hebearmabschnitte kann auslenkbar oder schwenkbar an dem Fahrwagen angeordnet sein. An dem freien Ende des anderen Hebearmabschnittes kann dann das Frässystem 1 angeordnet sein.

Das freie Ende eines der beiden Hebearmabschnitte kann optional auslenkbar oder schwenkbar an einem Grundträger angeordnet sein, der wiederum relativ zum Fahrwagen drehbar an dem Fahrwagen angeordnet ist.

Wie mit dem vorstehend genannten Rohr kann auch mit dem Hebearm das Frässystem 1 zunächst angehoben werden und in die Nähe der zu bearbeitenden Stelle gebracht werden. Die Präzisionsausrichtung des Fräswerkzeuges wird dann von bzw. mit dem erfindungsgemäßen Frässystem 1 vorgenommen.

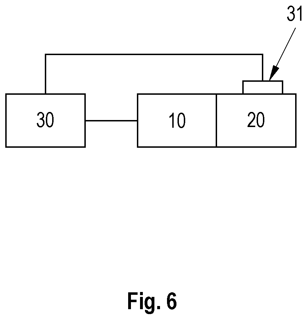

**Fig. 6** zeigt ein Blockschaltbild eines erfindungsgemäßen Frässystems.

Die Motoreinheit 10 ist mit dem Fräskopf 20 gekoppelt, wie vorstehend mit Bezug auf Fig. 1 bis Fig. 4 beschrieben. Alternativ kann die Motoreinheit 10 mehrere Motoren aufweisen, die jeweils an der entsprechenden Achse (Bewegungsachsen, Drehachse und Schwenkachse) im Fräskopf 20 angeordnet sein können, wie in der alternativen Ausgestaltung zu Fig. 1 bis Fig. 4 beschrieben.

Das erfindungsgemäße Frässystem umfasst neben der Motoreinheit und dem Fräskopf eine Steuervorrichtung 30, die mit der Motoreinheit 10 gekoppelt ist. Mit der Steuervorrichtung 30 wird die Motoreinheit bzw. werden die Motoren der Motoreinheit gesteuert / geregelt.

In einer Ausgestaltung der Erfindung kann die Steuervorrichtung 30 mit einer außerhalb des Kanals angeordneten (hier nicht gezeigten) Bedieneinheit gekoppelt sein. Über die Bedieneinheit kann das Personal das Frässystem steuern. Entsprechende Steueranweisungen werden von der Bedieneinheit an die Steuervorrichtung 30 übertragen. Die Steuervorrichtung 30 kann hierbei so ausgestaltet sein, dass sie die empfangenen Steueranweisungen in Steueranweisung für die jeweiligen Motoren umsetzt und die Motoren entsprechend steuert.

Beispielsweise kann das Bedienpersonal eine Koordinate im Raum (Kanal) angeben, zu der das Fräswerkzeug 21 hinbewegt werden soll. Die Steuervorrichtung 30 kann dann beispielsweise aus der angegebenen Koordinate und der aktuellen Position des Fräswerkzeuges 21 einen Pfad ermitteln, entlang dem das Fräswerkzeug 21 bewegt werden muss, um die gewünschte Position zu erreichen. Die Motoren werden dann jeweils so gesteuert, dass sich das das Fräswerkzeug 21 entlang dieses Pfades bewegt.

In einem Beispiel kann das Bedienpersonal die Steuervorrichtung 30 anweisen (z.B. unter Angabe von Koordinaten) das Fräswerkzeug 21 hin zum Mittelpunkt eines Seiteneinlaufes zu bewegen, der mit einem Inliner abgedeckt ist. Als nächstes kann das Bedienpersonal die Steuervorrichtung 30 anweisen (z.B. unter Angabe des Durchmessers des Seiteinlaufes und des Durchmessers des Kanalrohres) den Seiteneinlauf zu öffnen, d.h. mit dem Fräswerkzeug den Inliner im Bereich des Seiteneilaufes zu entfernen. Basierend auf dem Durchmesser des Seiteinlaufes, des Durchmessers des Kanalrohres und der aktuellen Position des Fräswerkzeuges kann die Steuervorrichtung ermitteln, auf welchen Pfad (und gegebenenfalls mit welchem Vorschub) das Fräswerkzeug bewegt werden muss, um den Seiteneinlauf vollständig freizulegen. Hier wird auch weiterer Vorteil des erfindungsgemäß Frässystems deutlich: da das Fräswerkzeug entlang eines vorgegebenen Pfades bewegt werden kann, sind verhältnismäßig Fräswerkzeuge ausreichend, um auch große Bereiche zu bearbeiten. Ein kleines Fräswerkzeug kann ich diesem Beispiel entlang des Randes des Seitenlaufes geführt werden, um den Seiteinlauf freizulegen - der zu entfernende Inliner wird also entlang des Randes des Seitenlaufes mit dem Fräswerkzeug ausgeschnitten. Die auf das Frässystem wirkenden Rückstellkräfte werden dadurch gering gehalten, wodurch auch die auf ein Fahrzeug (an dem das Frässystem angeordnet ist) wirkenden Kräfte gering gehalten werden.

Die Steuervorrichtung 30 kann Speichermittel aufweisen, in dem ein vordefinierter Programmablauf (oder mehrere vordefinierte Programmabläufe) gespeichert sein kann. Mit den vordefinierten Programmabläufen kann die Steuervorrichtung die Motoreinheit in einer vorbestimmten Weise steuern. Beispielsweise kann ein vordefinierter Programmablauf vorgesehen sein, mit dem der Fräskopf in eine Neutralstellung gebracht wird, wie beispielsweise in Abbildung (a) der Fig. 5 gezeigt. Solche vordefinierten Programmabläufe können vom Bedienpersonal über die Bedieneinheit aktiviert werden. In einer Ausgestaltung können mehrere vordefinierte Programmabläufe in einer Sequenz hintereinander ausgeführt werden, die ebenfalls von dem Bedienpersonal festgelegt werden kann. Damit kann ein Fräsvorgang teilweise oder vollständig automatisch durchgeführt werden.

An dem Fräskopf 1 können ein oder mehrere Sensoren 31 vorgesehen sein, mit denen bestimmte Fräsparameter erfasst und überwacht werden können. Beispielsweise kann mit einem Kraftsensor eine auf das Fräswerkzeug 21 wirkenden Kraft oder ein auf das Fräswerkzeug 21 wirkendes Drehmoment erfasst werden. Weitere Sensoren für weitere Fräsparameter können vorgesehen sein.

Basierend auf den Messwerten der Sensoren, kann die Steuervorrichtung 30 den Fräsvorgang steuern bzw. regeln. Überschreitet beispielsweise das Drehmoment des Fräswerkzeuges einen bestimmten Wert, kann die Steuervorrichtung 30 beispielsweise den der Bewegungsachse Z zugeordneten Motor veranlassen, das Fräswerkzeug solange entlang der Bewegungsachse Z zurückzufahren, bis der detektierte Wert des Drehmoments einen vorbestimmten Wert unterschreitet (oder alternativ den Vorschub des Fräswerkzeug entlang der Bewegungsachse Z solange zu unterbrechen, bis das detektierte Drehmoment einen vorbestimmten Wert unterschreitet).

Die Sensoren bzw. die von den Sensoren detektierten Messwerte können (vorzugsweise von der Steuervorrichtung) verwendet werden, um in den Fräsvorgang korrigierend einzugreifen. Beispielsweise kann ein Personal das Frässystem anweisen einen Inliner freizulegen (wie im obigen Beispiel beschrieben). Unter idealen Bedingungen wird das Fräswerkzeug entlang des gewünschten Pfades bewegt und der zu entfernende Inliner wird herausgeschnitten. Idealbedingungen liegen allerdings gerade in einem Kanal nur sehr selten vor. So kann das Fräswerkzeug während der Bewegung entlang des gewünschten Pfades beispielsweise auf ein Hindernis sto-ßen, das den seitlichen Druck auf das Fräswerkzeug über einen bestimmten Wert hinaus ansteigen lässt. Ist ein entsprechender Sensor hierfür vorgesehen, kann die Steuervorrichtung korrigierend in den Fräsvorgang eingreifen, indem die Bewegung in Richtung des Hindernisses gestoppt oder der Vorschub in Richtung des Hindernisses reduziert wird, beispielsweise so lange, bis der seitliche Druck einen bestimmten Wert wieder unterschreitet. Ein weiteres Beispiel für den korrigierenden Eingriff wäre die Temperatur des Fräswerkzeuges: wird ein bestimmter Temperaturwert überschritten (was mit einem entsprechenden Temperatursensor detektiert werden kann), kann beispielsweise die Drehzahl des Fräswerkzeug reduziert werden.

Für den korrigierenden Eingriff in den Fräsvorgang können vordefinierte Programmabläufe vorgesehen sein, die ebenfalls in der Speichereinrichtung der Steuervorrichtung gespeichert sein können. Solche Programmabläufe können mit Bedingungen verknüpft sein. Beispielsweise kann die Bedingung für einen vordefinierten Programmablauf, mit dem die Drehzahl des Fräswerkzeuges stufenweise reduziert werden kann, lauten: "Temperatur > 150°C". Tritt diese Bedingung ein, kann die Steuervorrichtung den aktuellen Ablauf des Fräsvorganges unterbrechen und den vordefinierten Programmablauf ausführen. Nach Beendigung des vordefinierten Programmablaufes, etwa wenn die Temperatur wieder unter einem bestimmten Wert gesunken ist, kann der "normale" Ablauf des Fräsvorganges wieder aufgenommen werden. Ein solches korrigierendes Eingreifen in den Fräsvorgang kann auch vorgesehen sein, wenn der Fräsvorgang vollständig von dem Bedienpersonal gesteuert wird. Dem Bedienpersonal kann ein korrigierender Eingriff an der Bedieneinheit angezeigt werden (auch wenn der Fräsvorgang teilweise oder vollständig automatisch abläuft).

Mit dem korrigierenden Eingriff können Beschädigungen am Fräswerkzeug, am Frässystem oder gar am Fahrwagen, an dem das Frässystem angeordnet ist, vorgebeugt oder gar vermieden werden. Die Lebensdauer des Gesamtsystems kann so deutlich erhöht werden, da der Verschleiß reduziert wird.

### Bezugszeichen:

- 1: Frässystem
- 10: Motoreinheit des Frässystems 1
- 20: Fräskopf des Frässystems 1
- 21: Fräswerkzeug des Fräskopfes 20
- 22: Antrieb für Bewegung entlang der zweite Bewegungsachse Y
- 23a: Fräswerkzeugeinheit des Fräskopfes 20
- 23b: Schwenkgabel des Fräskopfes 20
- 23c: Fräskopfführung des Fräskopfes 20
- 30: Steuervorrichtung des Frässystems 1
- 31: Sensorsystem des Frässystems 1
- 40: Hebesystem
- 41: Konsole des Hebesystems
- DA: Drehachse
- SA: Schwenkachse
- X: erste Bewegungsachse
- Y: zweite Bewegungsachse
- Z: dritte Bewegungsachse

## Patentansprüche

1. Frässystem (1) für die Sanierung eines Kanals, insbesondere Abwasserkanals, umfassend
- eine Motoreinheit (10) und
- einen Fräskopf (20), an dem ein Fräswerkzeug (21) angeordnet ist, wobei
der Fräskopf (20) mit der Motoreinheit (10) gekoppelt ist und das Fräswerkzeug (21) entlang zumindest einer Bewegungsachse bewegbar ist, und
die Motoreinheit (10) derart mit dem Fräskopf (20) gekoppelt ist, dass mit ihr ein Bewegen des Fräswerkzeuges (21) entlang der zumindest einen Bewegungsachse bewirkt werden kann.

2. Frässystem nach dem vorhergehenden Anspruch, wobei die zumindest eine Bewegungsachse
- eine erste Bewegungsachse (X),
- eine zweite Bewegungsachse (Y) und
- eine dritte Bewegungsachse (Z)
umfasst, wobei das Fräswerkzeug (21) entlang der ersten, zweiten und/oder dritten Bewegungsachse (X; Y; Z) bewegbar ist, und wobei die Motoreinheit (10) derart mit dem Fräskopf (20) gekoppelt ist, dass mit ihr ein Bewegen des Fräswerkzeuges (21) entlang der ersten, zweiten und/oder dritten Bewegungsachse (X; Y; Z) bewirkt werden kann.

3. Frässystem nach dem vorhergehenden Anspruch, wobei die Motoreinheit (10) mittels einer Getriebeeinheit, insbesondere Winkelgetriebeeinheit, mit dem Fräskopf (20) gekoppelt ist, wobei jeder Bewegungsachse (X; Y; Z) ein Getriebe der Getriebeeinheit zugeordnet ist, wobei die Getriebe der Getriebeeinheit unabhängig voneinander betrieben werden können.

4. Frässystem nach Anspruch 2, wobei die Motoreinheit (10) eine Anzahl von Motoren, insbesondere Elektromotoren, umfasst, wobei jeder Bewegungsachse (X; Y; Z) ein Motor der Anzahl von Motoren zugeordnet ist, und wobei jeder Motor angepasst ist, das Fräswerkzeug (21) entlang der jeweiligen Bewegungsachse (X; Y; Z) zu bewegen.

5. Frässystem nach einem der vorhergehenden Ansprüche 3 oder 4, wobei
- der Fräskopf (20) um eine Drehachse (DA) drehbar, und/oder
- das Fräswerkzeug (21) um eine Schwenkachse (SA) schwenkbar ist, wobei der Drehachse (DA) und/oder der Schwenkachse (SA) jeweils ein Getriebe der Getriebeeinheit oder ein Motor der Anzahl von Motoren zugeordnet ist.

6. Frässystem nach einem der vorhergehenden Ansprüche, wobei das Frässystem (1) ferner eine Steuervorrichtung (30) umfasst, die mit einem Sensorsystem (31) und der Motoreinheit (10) gekoppelt ist, wobei die Steuervorrichtung (30) angepasst ist, abhängig von den mit dem Sensorsystem detektierten Messwerten die Motoreinheit zu steuern.

7. Frässystem nach dem vorhergehenden Anspruch, wobei das Sensorsystem (31)
- zumindest einen Kraftsensor zur Detektion zumindest einer auf das Fräswerkzeug (21) wirkenden Kraft, und/oder
- einen Temperatursensor zur Detektion einer Temperatur des Fräswerkzeugs (21), und/oder
- einen Drehmomentsensor zur Detektion des auf das Fräswerkzeug (21) wirkenden Drehmoments
umfasst.

8. Frässystem nach einem der beiden vorhergehenden Ansprüche, wobei die Steuervorrichtung (30) angepasst ist, die Motoreinheit (10) gemäß einem vorbestimmten Programmablauf zu steuern.

9. Frässystem nach einem der vorhergehenden Ansprüche, wobei dieses mittelbar oder unmittelbar an einem Fahrwagen eines Kanalinspektionssystem anordenbar ist.

10. Frässystem nach dem vorherigen Anspruch, wobei dieses an einem freien Ende eines Hebesystems angeordnet ist, wobei das Hebesystem an dem Fahrwagen angeordnet ist.

11. Kanalinspektionssystem, umfassend einen Fahrwagen und ein Frässystem nach einem der vorhergehenden Ansprüche.
